Europäisches Patentamt

(19) European Patent Office

Office européen des brevets

(11) Numéro de publication: **0 164 802**
**B1**

(12) **FASCICULE DE BREVET EUROPEEN**

(45) Date de publication du fascicule du brevet: **29.08.90**

(51) Int. Cl.⁵: **B 21 D 53/30**

(21) Numéro de dépôt: **85200890.3**

(22) Date de dépôt: **06.06.85**

(54) Appareillage pour la fabrication de viroles pour roues en tôle soudée pour véhicules.

(30) Priorité: **15.06.84 IT 6761284**
**15.06.84 IT 6761384**

(43) Date de publication de la demande:
**18.12.85 Bulletin 85/51**

(45) Mention de la délivrance du brevet:
**29.08.90 Bulletin 90/35**

(84) Etats contractants désignés:
**AT BE CH DE FR GB LI LU NL SE**

(56) Documents cités:
**WO-A-82/01142**
**DE-A-2 437 641**
**DE-A-2 901 824**
**FR-A- 625 015**
**FR-A-2 044 501**
**FR-A-2 300 639**
**US-A-2 456 432**

(73) Titulaire: **C.M.R. COSTRUZIONI MECCANICHE
RHO S.p.A.
Via Enrico Mattei 13
I-20017 Rho (Milan) (IT)**

(72) Inventeur: **Caprioglio, Luigi, Dr. Ing.
Corso Francia 224
I-10146 Torino (IT)**

(74) Mandataire: **Patrito, Pier Franco, Dr. Ing.
Cabinet PATRITO BREVETTI Via Don Minzoni 14
I-10121 Torino (IT)**

Courier Press, Leamington Spa, England.

**Description**

La présente invention se rapporte à un appareillage pour la fabrication, à partir de tronçons de bande de tôle, de viroles destinées à être successivement usinées pour former des jantes pour roues de véhicules, comprenant principalement une station d'enroulement constituée substantiellement par une calandre, une station de soudage, une station de finition et une sttion d'enlèvement du matériel en excès résultant de la soudure.

Normalement, les roues en tôle soudée pour véhicules sont fabriquées en joignant, pour chaque roue, une coupe, réalisée en tôle emboutie, avec une jante obtenue par usinage d'une virole qui, à son tour, est réalisée en soudant l'un à l'autre les bords d'extrémité d'un tronçon de bande de tôle incurvée. Pour la production de ces viroles on utilise des appareillages comprenant une succession de stations, parmi lesquelles principalement une machine à enrouler (dite calandre), une machine à souder à étincellement et une machine pour l'enlèvement mécanique du matériel en excès expulsé de la zone de soudure. Ces différentes machines sont assemblées, pour former une ligne de production, simplement en les reliant entr'elles par l'interposition de moyens de transport des pièces en travail, et elles travaillent d'une façon synchronisée, mais substantiellement individuelle, les pièces en travail étant simplement prises d'une machine qui a terminé son opération et transportées à la machine suivante pour l'exécution de l'opération successive. Un tel appareillage présente un encombrement considérable, des temps morts de transport, des difficultés de synchronisation et, en relation avec les temps différents de travail des différentes stations, l'impossibilité d'utiliser en plein la capacité de travail de certaines stations, ce qui a comme résultat une limitation de la productivité, ainsi que des coûts de fabrication élevés. En particulier, la station de soudage présente des temps de travail beaucoup plus longs que ceux des autres machines, et de ce fait elle représente un fort étranglement du flux des opérations. En outre, un tel appareillage ne se prête pas convenablement pour l'exécution du soudage au moyen de procédés différents du procédé de soudage à étincellement. Ce procédé présente les inconvénients de donner lieu à une projection de particules de métal et de scories dans l'ambiant de travail, de demander l'emploi de tôle de qualité relativement élevée, de présenter des temps de soudage relativement longs et de donner lieu dans les soudures à des inclusions gazeuses et de scories, donc à une certaine porosité, qui n'est pas acceptable dans les roues pour pneus sans chambre d'air et qui donne lieu à un pourcentage de rejets économiquement très lourd.

Le brevet FR—A—2.300.639 a proposé un appareillage selon la première partie de la revendication 1 pour fabriquer des viroles pour roues en tôle soudée, dans lequel les machines destinées à effectuer les différentes opérations sont coordonnées en les disposant l'une après l'autre le long d'une trajectoire droite de sorte à simplifier le transport des pièces en cours de travail. Toutefois, dans un tel appareillage la machine à souder doit délimiter un passage ouvert continu orienté dans le sens de l'axe des pièces en cours de travail, et cela limite le genre de machine à souder qu'on peut employer, et qui doit être du type à étincellement ou strictement similaire. Cet appareillage autorise une meilleure organisation du travail, mais il ne permit pas de surmonter les inconvénients indiqués. Il demeure donc le problème de réduire les temps de travail, d'éviter toute projection de particules dans l'ambiant de travail, de permettre l'empoi d'une tôle de qualité moins élevée et d'obtenir des soudures dépourvues d'inclusions gazeuses et de scories, ainsi évitant les rejets.

Le but de la présente invention est de réaliser un appareillage pour la tâche indiquée, formé par la combinaison organisée d'une série de stations strictement coordonnées entr'elles de sorte que chaque pièce passe directement de chaque station à la successive sans aucun temps mort de transport, mais en faisant de sorte que la productivité de chaque machine de l'appareillage puisse être exploitée convenablement malgré les différences dans les temps de travail des différentes machines; cet appareillage, en outre, étant tel à permettre l'exécution du soudage par un procédé plus convenable que le procédé par étincellement, et donnant lieu à des produits de meilleure qualité.

Ce but est atteint, selon l'invention, par un appareillage pour la fabrication, à partir de tronçons de bande de tôle, de viroles destinées à être successivement usinées pour former des jantes pour roues de véhicules, comprenant une station d'enroulement constituée par une calandre, une station de soudage, une station de finition et une station d'enlèvement du matériel en excès résultant de la soudure, caractérisée en ce que la station de soudage est constituée par deux machines à souder à rouleaux nivelés du type discontinu, avec des moyens correspondants de prise de la pièce en travail, déplaçables entre une position étendue et une position retirée, et par un support mobile des machines à souder, déplaçable entre une première et une deuxième position, la station de finition est constituée par une station de laminage à chaud formée par au moins une paire de rouleaux, par des moyens pour l'actionnement d'au moins un de ces rouleaux, et par des moyens pour supporter et guider les pièces en travail; et la station d'enlèvement est constituée par des moyens mécaniques d'enlèvement de matériel disposés pour agir seulement sur les zones d'extrémité des pièces en travail; la disposition réciproque desdites stations étant telle que, quand ledit support mobile de la station de soudage est dans sa première position, la première machine à souder et le premier moyen de prise font face à la station d'enroulement, ledit moyen de prise, dans sa position étendue, s'avance dans la station d'enroulement dans une position telle à permettre la prise de la pièce qui s'y trouve, et le deuxième machine à souder et le deuxième moyen de prise font face à la station de laminage, tandis que, quand ledit support mobile de la station de soudage est dans sa deuxième position, la première machine a souder et le premier moyen de prise font face à la station de laminage, ledit moyen de prise, dans sa position étendue, est dans une position telle à permettre le transfert d'une pièce aux moyens de support et de guidage de la station de laminage, et la deuxième machine à souder et le deuxième moyen de prise font face à la station d'enroulement; ladite machine à souder étant disposée pour effectuer l'opération de soudage pendant la course desdits moyens de prise de la position retirée vers la position étendue, et ledit support mobile de la station de soudage étant disposé pour passer de la première à la deuxième position pendant l'exécution du soudage.

Grâce à ces caractéristiques, un tronçon de bande de tôle alimenté à la station d'enroulement est enroulé, et dans la condition ainsi atteinte, il est pris par le moyen de prise de la station de soudage et, tout en maintenant inchangée la configuration géométrique des bords à souder, il est introduit dans la machine à souder à rouleaux et puis il est poussé de nouveau vers l'extérieur pendant l'exécution de soudage et pendant que la machine à souder, qui faisait face à la station d'enroulement, se déplace jusqu'à se placer en face de la station de laminage, et elle cède immédiatement à cette dernière la pièce venant d'être soudée, laquelle alors peut être laminée à chaud en utilisant la chaleur apporté par le procédé de soudage. Enfin, la station d'enlèvement du matériel expulsé peut agir seulement sur les extrémités de la pièce en travail, grâce au fait que le procédé de soudage à rouleux nivelés ne produit pas des crêtes de matériel expulsé le long de toute la soudure, mais seulement une saillie modérée, laquelle est aplanie par la station de laminage, et des pointes de matériel faisant saillie seulement aux extrémités de la ligne de soudure, lesquelles sont enlevées par la station d'enlèvement du metériel en excès.

Le procédé appliqué par cet appareillage est caractérisé en ce qu'il comprend en combinaison une opération de soudage à rouleaux nivelés (soudage dit "écrasé") des bords d'extrémité d'un tronçon de bande de tôle incurvée, et une opération de laminage à chaud de la zone de soudure qui en résulte, effectuée immédiatement après l'opération de soudage en utilisant au moins en grande partie la chaleur produite dans l'opération précédente de soudage.

Les roues qui résultent de l'opération effectuée par l'appareillage suivant l'invention sont caractérisées par la structure métallographique de la zone de soudure de leur jantes, à grain fin et régulier, exempte de décarburation, de durcissements, d'inclusions de gaz et de porosité.

En raison de la manière d'opérer déterminée par la structure indiquée de l'appareillage, on obtient des économies importantes de temps opératifs, particulièrement dans l'exécution du soudage, et par conséquent une exploitation satisfaisante et ordonnée de la capacité opérative des machines formant l'appareillage, une amélioration importante des caractéristiques des pièces produites, grâce à l'exécution du soudage par un procédé qui assure une structure métallographique plus favorable, et des économies appréciables dérivant d'une réduction des gaspillages de matériel, de la possibilité d'employer des tôles moins coûteuses, et d'économies d'énergie. De plus, l'appareillage tout entier prend une configuration compacte qui en réduit considérablement l'encombrement global.

La station de soudage comprend deux machines à souder avec les moyens de prise correspondants, disposées de sorte que, dans la première position du support de la station, la première machine à souder et le premier moyen de prise font face à la station d'enroulement, et la deuxième machine à souder et le deuxième moyen de prise font face à la station de laminage tandis que, dans la deuxième position du support de la station, la première machine à souder et le premier moyen de prise font face à la station de laminage et la deuxième machine à souder et le deuxième moyen de prise font face à la station d'enroulement. Grâce à cette caractéristique, chaque machine à souder peut exécuter un soudage pendant le temps dans lequel l'autre machine à souder revient de la position dans laquelle elle fait face à la station de laminage à la position dans laquelle elle fait face à la station d'enroulement, en permettant ainsi de réduire ultérieurement le temps global de l'opération de soudage et d'augmenter la productivité.

Une disposition similaire peut être appliquée pour la station de laminage.

Les caractéristiques mentionnées et d'autres, et les avantages de l'application de l'invention, ressortiront plus clairement de la suivante description de quelques modes de réalisation, donnés à titre d'exemples non limitatifs et représentés schématiquement dans les dessins annexés, dans lesquels:

la figure 1 montre à petite échelle le schéma d'une forme de réalisation particulièrement simple d'un appareillage utilisant l'invention, appropriée pour des productions modérées;

la figure 2 montre d'une manière similaire le schéma d'une forme de réalisation plus évoluée, appropriée pour des productions plus importantes;

la figure 3 montre à une échelle plus grande et avec plus de détails le schéma de la figure 2;

la figure 4 montre en perspective les parties essentielles de la station d'enroulement;

la figure 5 montre en perspective les parties essentielles de la paire de machines à souder et du support mobile de la station de soudage;

la figure 6 montre en perspective les parties essentielles du moyen de prise annexé à chacune des machines à souder selon la figure 5;

la figure 7 représente en perspective, en particulier, l'une des électrodes des machines à souder selon la figure 5;

les figures 8 à 15 montrent schématiquement les phases successives du fonctionnement coordonné des machines à souder et des moyens de prise de la station de soudage;

la figure 16 montre en perspective les parties essentielles de la station de laminage;

la figure 17 montre les parties essentielles d'un dispositif de la station d'enlèvement du matériel en excès.

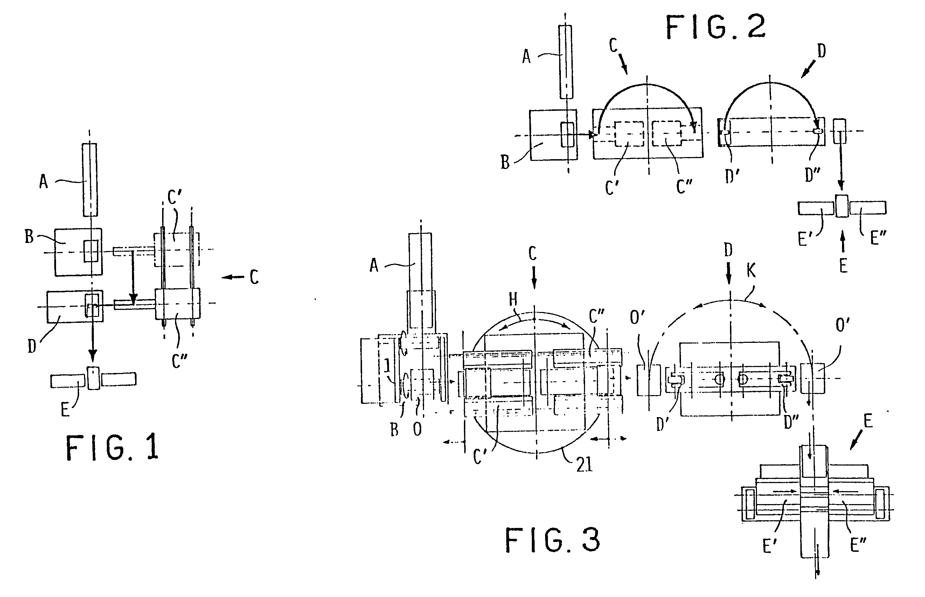

Avec référence à la figure 1, un appareillage selon un mode de réalisation de l'invention comprend, dans sa forme la plus simple, une station d'enroulement 8, alimentée par des moyens appropriés A d'apport de tronçons de bande de tôle (ces moyens étant connus en soi et ne faisant pas partie de la présente invention), une station de soudage C déplaçable dans son ensemble (dans le présent exemple, par une translation) entre une position d'entrée C'' faisant face à la station d'enroulement B et une position de sortie C' faisant face à une station de laminage D, et une station E d'enlèvement du matériel en excès, laquelle fait suite à la station de laminage D. Dans cette forme de réalisation, appropriée pour des productions modérées, la machine à souder de la station de soudage C est unique, elle fait le soudage pendant le déplacement de la position C' à la position C'' et demeure inactive pendant le retour de la position C'' à la position C'.

Par contre, dans la forme de réalisation plus élaborée selon la figure 2, la station de soudage comprend une paire de machines à souder déplaçables (dans cet example, par une demi-rotation) entre une position d'entrée C' faisant face à la station d'enroulement B et une position de sortie C'' faisant face à la station de laminage D. Cette dernière, à son tour, comprend une paire de machines à laminer déplaçables (dans cet exemple, par une demi-rotation) entre une position d'entrée D' faisant face à la station de soudage C et une position de sortie D'' à la quelle fait suite la station d'enlèvement E. La station d'enlèvement E comprend, elle aussi, deux dispositifs d'enlèvement E' et E'', destinés à travailler simultanément sur les deux côtés de la virole soudée et laminée. Le schéma selon la figure 2 est reproduit à une échelle plus grande et avec plus de détails dans la figure 3 et, comme il s'agit de la forme de réalisation préférée, la suite de cette description va se rapporter à cet exemple.

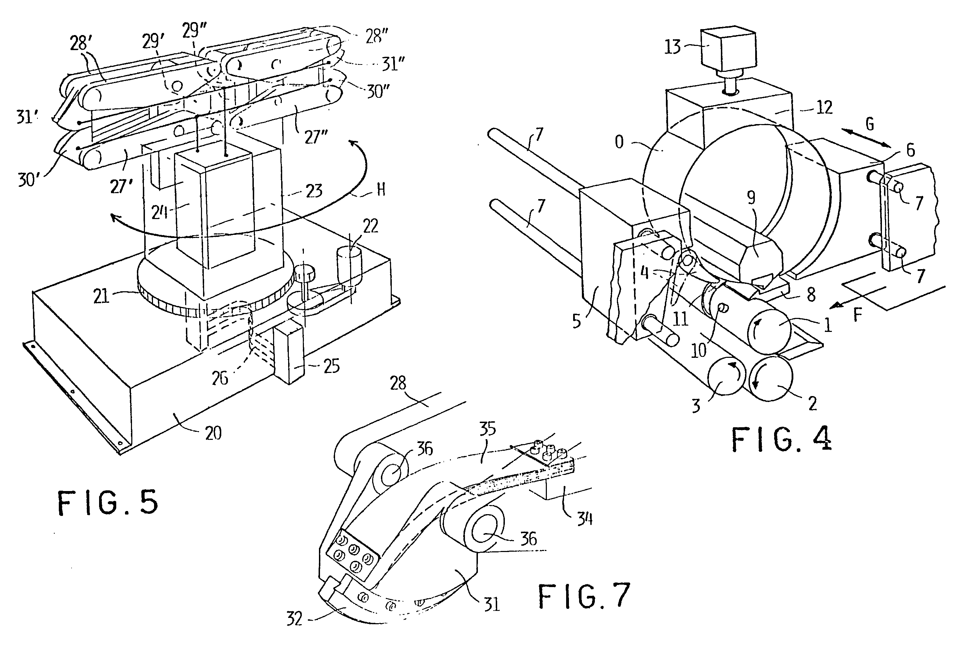

Faisant référence à la figure 4, la station d'enroulement comprend une série de rouleaux 1, 2, 3 maintenus en rotation par des moyens d'actionnement non représentés, et disposés, d'une façon connue, pour incurver un tronçon de tôle introduit entr'eux dans le sens de la flèche F, en lui faisant prendre une forme cylindrique 0 correspondante à celle de la virole à réaliser. La station comprend aussi un ensemble de guidage formé par deux blocs 5 et 6 deplaçables lelong de glissières fixes 7 suivant les flèches doubles G. Sur le bloc 5 est pivoté un volet de guidage 4 qui, pendant l'enroulement, est déplacé dans la position indiquée à lignes interrompues. Au dessus du rouleau 1 est installée une plaque 8 ayant une saillie d'arrêt, et au dessus de cette plaque est installée encore une barre 9 pourvue, elle aussi, d'une saillie d'arrêt. Les deux saillies d'arrêt de la plaque 8 et de la barre 9 sont situées l'une en face du l'autre, espacées l'une par rapport à l'autre verticalement d'une distance égale à l'épaisseur de la tôle employée, et horizontalement d'une distance égale à la largeur de recouvrement qu'on désire avoir au moment du soudage. Ces distances peuvent éventuellement être réglables, pour une mise au point perfaite.

Au moment où le tronçon de tôle incurvée quitte les rouleaux 1 et 2, guidé par les blocs 5, 6 il va abouter par son bord antérieur contre la saillie de la plaque 8, tandis que son bord postérieur, aidé par l'oscillation du volet 4 qui est déplacé dans la position indiquée par une ligne continue, ainsi que par la poussée de doigts rétractables 10 prévus sur le rouleau 1 et, si nécessaire, par des raclettes 11 disposées sur la plaque 8, va abouter contre la saillie de la barre 9. La prise et le maintien correctes de cette position (à laquelle correspond la configuration exacte de la virole à réaliser) est assurée par la pression qui est exercée, après que la tôte enroulée 0 a assumé la position décrite, par un bloc supérieur de retenue 12 poussé par un cylindre hydraulique 13 ou autre moyen d'actionnement. A ce point la virole se trouve dans une condition appropriée pour le passage à la phase de soudage.

Faisant référence à la figure 5, la station de soudage comprend un embasement 20 sur lequel est monté un coussinet tournant 21 qui supporte les appareils formant la station et peut être mis en rotation par un moteur d'actionnement 22. Sur le coussinet 21 est montée une plinthe 23 contenant un transformateur de soudage 24 alimenté, à partir de conducteurs fixes 25, à travers des conducteurs flexibles 26; il n'est pas nécessaire de prévoir des contacts glissants ou semblables, parce que le coussinet 21 fait seulement des demi-rotations, alternativement en directions opposées, suivant la flèche courbée double H. Sur la plinthe 23 sont montées, en des positions symétriquement opposées, deux machines à souder spéciales à pince à rouleaux, dont les composants sont indiqués respectivement par des marques simpels (') et par des marques doubles (''), et l'une seulement de ces machines sera maintenant décrite en utilisant des numéros de référence sans marques.

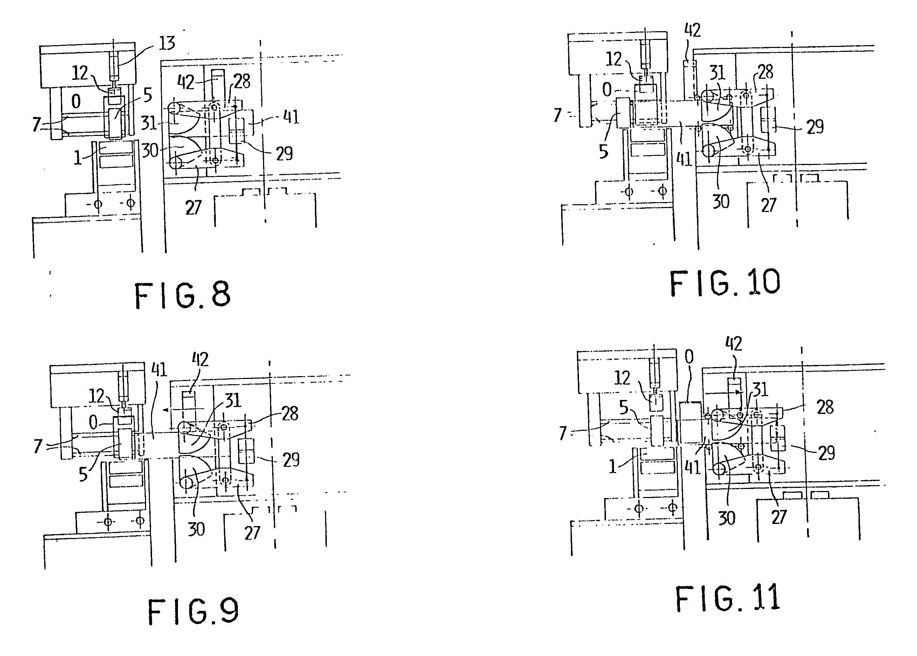

La machine à souder comprend une paire de bras à culbuteur inférieurs 27 et une paire de bras à colbuteur supérieurs 28, pivotés sur des supports portés par la plinthe 23, et sont les extrémités externes peuvent être approchées l'une l'autre sous effort grâce à un cylindre hydraulique 29 relié à leurs extrémités internes. Sur les extrémités externes des bras de chaque paire est pivoté un rouleau à secteur, respectivement 30 et 31. Comme le montre la figure 7, chaque rouleau à secteur, par exemple 31, est pivoté en 36, il porte un segment opératif rechangeable 32, retenu par des moyens de retenue 33, et il est relié à un conducteur fixe 54 au moyen d'un conducteur flexible 35. La longueur périphérique du segment opératif 32 est au moins égale à la longueur de la soudure à exécuter sur la virole. Le soudage est effectué par roulement des segments opératifs des rouleaux 30 et 31, sous une forte pression appliquée par le cylindre hydraulique 29, et pendant l'application, de le part du transformateur 24, d'une tension électrique réduite appropriée, à laquelle correspond un fort courant capable d'effectuer le soudage. Le roulement des rouleaux 30 et 31 a lieu sur les deux côtés opposés des bords d'extrémités superposés du tronçon de tôle incurvée 0 destiné à former la virole, guidé d'une façon appropriée entre les rouleaux à secteur 30 et 31. Le résultat de cette opération est un soudage à rouleaux à résistance du type dit "écrasé".

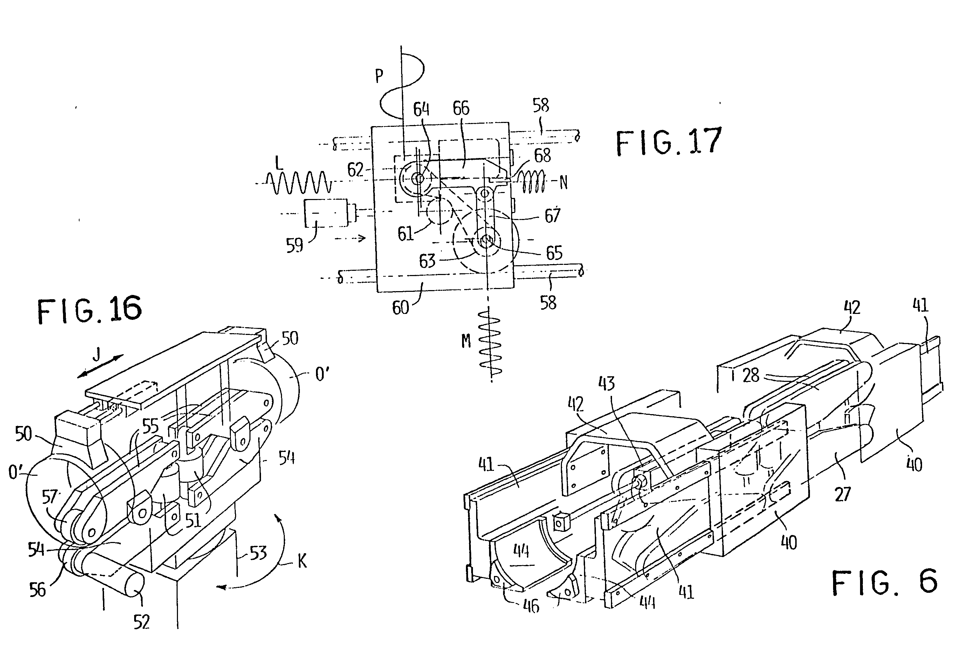

A chaque machine à souder de la station de soudage est associé un moyen de prise, non montré par la figure 1 et, par contre, représenté séparément dans la figure 6. Le moyen de prise comprend deux éléments mobiles 41 reliés par une entretoise 42 et déplaçables dans un organe de support 40 fixé à la plinthe 23, sous l'action de moyens d'actionnement, tels que des cylindres hydrauliques 43. Les éléments mobiles 41 s'étendent parallèlement aux bras supérieurs 28 de la machine à souder, à l'extérieur de ces bras, et se terminent à l'extrémité externe par des étaux 44 ayant un épaulement fixe 45 et une mâchoire mobile 46 munie de moyens d'actionnement, non représentés, disposés à l'intérieur des étaux 44. Les étaux 44 sont courbés d'une façon correspondante au tronçon incurvé 0 (figure 4) et donc à la virole à réaliser, et leurs dimensions sont telles qu'ils peuvent saisir fortement ledit tronçon incurvé, en le serrant selon sa direction axiale, lors que les mâchoires 46 sont actionnées.

Ces moyens de prise ont la fonction de prélever le tronçon de la station d'enroulement, de l'introduire dans la machine à souder, puis de le reporter vers l'extérieur pendant que le soudage est effectué, et enfin de présenter à la station de laminage le tronçon désormais soudé. Les opérations mentionnées ont lieu de la façon illustrée dans la série de figures de 8 à 15, qui en représentant autant de phases successives.

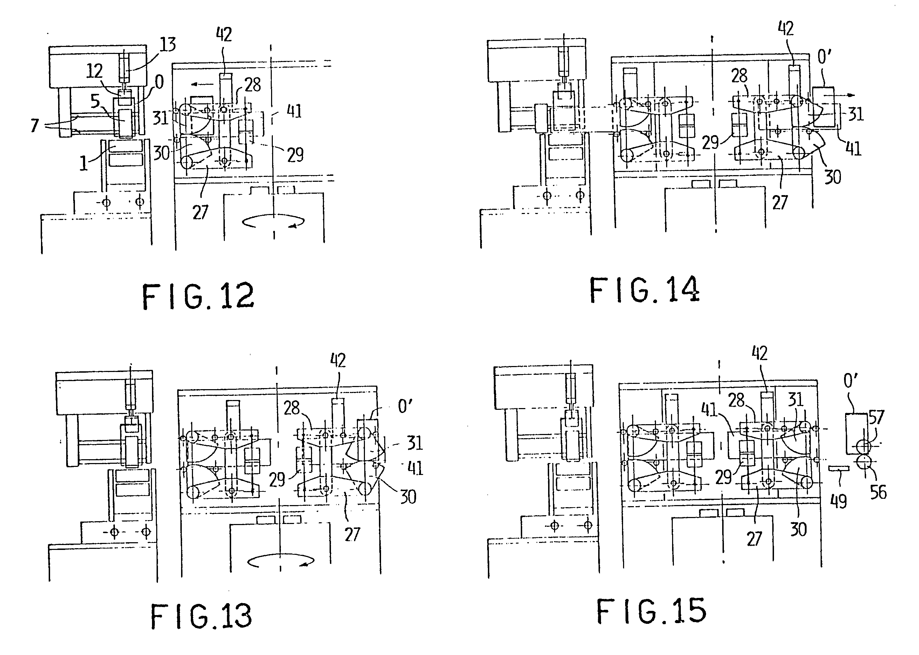

La figure 8 représente schématiquement la machine à souder dans la position faisant face à la station d'enroulement, avant le commencement de la prise. Les éléments mobiles 41 sont retirés complètement vers l'intérieur de la station de soudage; le tronçon 0 vient d'être enroulé et il est serré par le bloc supérieur 12. Au commencement de l'opération de prise, les éléments mobiles 41 sont déplacés ver l'extérieur jusqu'à ce qu'ils viennent en contact avec les blocs 5, (6) de la station d'enroulement (figure 9). En continuant à être poussés vers l'extérieur, les éléments mobiles 41 repoussent les blocs 5, (6), lesquels sont déplaçables sur les coulisses 7, jusqu'à les porter au-delà du tronçon enroulé 0 (figure 10); le tronçon roulé 0 est empêché de reculer par des butées postérieures à doigt, non représentées. Dans cette phase, les éléments mobiles 41 passent des deux côtés de la plaque 8 et de la barre 9, et les étaux 44 effleurent la surface inférieure du tronçon enroulé 0. A' la fin de cette course, les épaulements 45 butent contre les flancs du tronçon enroulé 0. A ce point sont activés les mâchoires 46, lesquelles serrent énergiquement le tronçon enroulé 0 dans les étaux 44 contre les épaulements 45. A partir de ce moment, le moyen de prise est capable de maintenir le tronçon enroulé 0 d'une manière stable dans la configuration qu'il présente, indépendamment de l'action des saillies de la plaque 8 et de la barre 9 et de la pression du bloc supérieur 12. Ce dernier est alors soulevé au moyen du cylindre hydraulique 13, en libérant ainsi le tronçon enroulé 0 de la station d'enroulement. Les éléments mobiles 41 sont alors rappelés à l'intérieur de la station de soudage, en amenant le tronçon enroulé 0, lequel est ainsi enlevé de la plaque 8 et de la barre 9, en maintenant inchangée la configuration géométrique de ses bords, tandis que les blocs 5, (6) reprennent leurs position normale pour permettre l'enroulement d'un nouveau tronçon (figure 11). Les éléments mobiles 41 sont complètement rappelés dans la station de soudage (figure 12), tandis que cette dernière commence à tourner sur soi-même sous l'action du moyen d'actionnement 22. Les éléments mobiles 41 sont alors poussés de nouveau vers l'extérieur, tandis que le cylindre 29 applique les rouleaux a secteur 30, 31, sous forte pression, contre les bords superposés du tronçon enroulé 0 et le transformateur 24 applique à ces rouleaux à secteur un courant de soudage. Les rouleaux à secteur, en roulant de cette façon contre le tronçon, réalisent un soudage écrasé. L'opération est représentée en cours d'exécution dans la figure 13, pendant que la station de soudage est en train de compléter une rotation de 180° sur soi-même par rapport à la position de la figure 12, de sorte que la machine à souder dont on suit le fonctionnement est maintenant tournée vers la partie opposée à la station d'enroulement. Dans la figure 14 l'opération de soudage est désormais terminée, et les éléments mobiles 41 sont en train de déplacer la virole soudée 0' vers la station de laminage, tandis que dans l'autre machine à souder de la station de soudage, qui maintenant fait face à la station d'enroulement, les éléments de prise sont en train de saisir un nouveau tronçon enroulé 0. Enfin, dans la figure 15, les éléments mobiles des deux machines à souder ont désormais été rappelés, la virole 0' qui vient d'être soudée est désormais prise par les rouleaux 56, 57 de la station de laminage, et le nouveau tronçon enroulé 0 qui doit être soudé a été introduit dans la deuxième machine à souder de la station, laquelle est en train de commencer à son tour l'opération de soudage. Cette opération sera accomplie pendant que la première machine à souder, par suite d'une demi-rotation (inverse par rapport à la précédente) de la station de soudage, reviênda faire face à la station d'enroulement, en terminant ainsi le cycle de fonctionnement décrit.

L'emploi, dans la machine à souder, de rouleaux de soudage 30, 31 réduits à un secteur et qui, au lieu de tourner d' une façon continue, effectuent une oscillation lelong d'un angle limité, présente différents avantages. Avant tout, le rayon d'actoin des rouleaux à secteur peut être choisi beaucoup plus grand qu'il pourrait être le rayon d'un rouleau complet, en considération des limitations d'encombrement impliquées par la nécessité de pénétrer dans le tronçon enroulé qu'on doit souder; cela a comme résultat une durée beaucoup plus longue de la surface opérative des rouleaux, ainsi qu'une exécution beaucoup plus régulière du soudage. En second lieu, la connexion électrique des rouleaux à secteur peut être faite au moyen des conducteurs flexibles 35, en évitant l'emploi de contacts glissants ou à mercure qui sont coûteux et qui exigent des forts engagements d'entretien. Enfin, les parties opératives des rouleaux qui sont exposées à détérioration sont limitées à des secteurs, et ces secteurs peuvent être rechangés lors qu'il est nécessaire avec une opération beaucoup plus simple et rapide qu'une opération de rechangement de rouleaux entiers, ainsi réduisant les temps morts d'arrêt de la machine.

En se référant à la figure 16, la station de laminage est double, analoguement à la station de soudage, et analoguement à la station de soudage elle comprend (figure 5) un embasement sur lequel est monté un coussinet tournant qui supporte les ampareils forment la station et qui peut être mis en rotation par un moteur d'actionnement. Sur ce coussinet tournant est monté un support 53 qui porte deux machines à laminer symétriquement opposées. Chaque machine à laminer comprend un bras inférieur 54 et un bras supérieur 55, qui forment un système à compas; aux extrémités externes des bras 54 et 55 son montés des rouleaux de laminage, respectivement 56, 57, l'un desquels est relié à un moteur 52 avec réducteur, les rouleaux 56, 57 peuvent être poussés l'un vers l'autre avec force par l'action d'un cylindre hydraulique 51 agissant sur les extrémités opposées ces bras 54, 55. Le support 53 porte aussi à son extrémité supérieure ceux moyens de support et de guidage 50, par exemple à retenue électromagnétique, coulissant selon la double flèche J. Sous l'action de moteur 52 avec réducteur, et de la pression du cylindre 51, les rouleaux 56 et 57 réalisent le laminage de la virole 0' qui vient d'être soudée et qui est alimentée par la station de soudage selon la figure 15. Ce laminage a lieu à chaud en raison de l'instantanéité avec laquelle le laminage succède au soudage et grâce à la chaleur appliquée à la zone intéressée pendant la précédente opération de soudage, et cela assure l'obtention de caractéristiques métallographiques favorables de la zone de soudure après le laminage, dont le but est d'aplanir la saillie modérée laissée par le soudage écrasé. En même temps en évite la consommation d'énergie qui autrement serait en relation avec le chauffage de la virole pour son laminage. Si on l'éstime utile, un élément chauffant de puissance modérée peut être installé en 49 (figure 15) lelong de la courte trajectoire percourue par le virole soudée 0' pour son passage de la station de soudage à la station de laminage, afin d'éviter une dispersion excessive de chaleur par irradiation pendant ce passage.

La rotation de la station de laminage, composée de demi-tours alternés en directions opposées, selon la double flêche courbe K, a lieu pendant le laminage de la virole soudée 0' et permet d'envoyer cette dernière, après le laminage, à la station successive d'enlèvement, pendant que la deuxième machine à laminer de la station de laminage se dispose devant la station de soudage pour en recevoir un'autre virole soudée à laminer.

La fonction de la station d'enlèvement du matériel en excès expulsé de la zone de soudure est extrêmement simplifiée, dans l'appareillage selon l'invention et en comparaison des appareillages connus dans lesquels le soudage a lieu par étincellement, car le soudage à rouleaux nivelès n'engendre pas des crêtes de matériel expulsé lelong de toute la ligne de soudure, mais seulement des pointes faisant saillie aux extrémités de la ligne de soudure, sur les flancs de la virole soudée. Par conséquent, la station d'enlèvement ne doit travailler que sur les flancs de la virole et pour l'enlèvement d'une masse minimale de matériel. Cela permet une exécution rationale de cette opération avec un outil agissant à la manière d'une limeuse.

Comme il est montré par la figure 3, la station d'enlèvement comprend deux dispositifs d'enlèvement opposés destinés à travailler simultanément sur les deux faces de la virole laminée; ces deux dispositifs sont symètriques entr'eux, et l'un seulement de ces dispositifs sera maintenant décrit en faisant référence à la figure 17. Chaque dispositif d'enlèvement comprend un bâti 60 coulissant, sous l'action d'un cylindre hydraulique 59, sur des glissières 58. Un moteur 61 monté sur le bâti 60 fait tourner synchroniquement deux roues 62, 63 pourvues de pivots excentriques 64, 65 disposés en quadrature entr'eux. Au pivot excentriques 64 est relié un bras 66 supportant, à son extrémité, un outil de limeuse 68; ledit bras 66 est relié aussi à une bielle 67 reliée au pivot excentrique 65.

En raison de l'excentricité du pivot 65, l'outil 68 reçoit un mouvement alternatif en une direction perpendiculaire aux glissières 58, représenté dans la figure 17 par le diagramme L. D'autre côté, l'outil 68 reçoit aussi, à cause de l'excentricité du pivot 64, un mouvement alternatif en une direction parallèle aux glissières 58, représenté par le diagramme M. La composition de ces deux mouvements donne lieu à un mouvement périodique complexe de l'outil 68, représenté par le diagramme N sous la forme approximative d'une cycloïde allongée. Grâce aux périodes de régression présentées par ce mouvement, il est possible d'approcher l'outil à la virole à travailler, au moyen du cylindre 59, et par exemple selon un diagramme comme celui indiqué par P, sans que l'outil donne lieu à aucun talonnement. Il devient ainsi possible d'exécuter l'enlèvement des pointes de matériel présentées par la virole laminée en correspondance des points de commencement et de fin du soudage par une opération d'outil que l'on peut effectuer rapidement, automatiquement et sans souiller l'ambient.

Les viroles, et par conséquent les roues, fabriquées par l'application de l'invention, si on les analyse dans le zone de soudure de la virole ou, respectivement, de la jante obtenue de la virole, présentent une structure métallographique plus fine et réguliére et exempte de porosité et d'inclusions de gaz, qui les distinguent favorablement des articles fabriqués par le procédé à étincellement et par les appareillages traditionnels.

**Revendications**

1. Appareillage pour la fabrication, à partir de tronçons (A) de bande de tôle, de viroles (0') destinées à être successivement usinées pour former des jantes pour roues de véhicules, comprenant une station (B) d'enroulement constituée par une calandre (1—13), une station (C) de soudage, une station (D) de finition et une station (E) d'enlèvement de matériel en excès résultant de la soudure, caractérisé en ce que la station (C) de soudage est constituée par deux machines à souder (28'—31'; 28''—31'') à rouleaux nivelés du type discontinu, avec des moyens correspondants (40—46) de prise de la pièce ent travail (0'), déplaçables entre une position étendue et une position retirée, et par un support mobile (20—23) des machines à souder, déplaçable entre une première et une deuxième position; la station (D) de finition est constituée par une station de laminage à chaud formée par au moins une paire de rouleaux (56, 57), par des moyens (52) pour l'actionnement d'au moins un de ces rouleaux, et par des moyens (50) pour supporter et guider les pièces (0') en travail, et la station (E) d'enlèvement est constituée par des moyens mécaniques (58—68) d'enlèvement de matériel disposés pour agir seulement sur les zones d'extrémité des pièces (0') en travail; la disposition réciproque desdites stations (B-E) étant telle que, quand ledit support mobile (20—23) de la station de soudage (C) est dans sa première position, la première machine à souder (28'—31') et le premier moyen de prise (40—46) font face à la station (B) d'enroulement, ledit moyen de prise (40—46), dans sa position étendue, s'avance dans la station d'enroulement (B) dans une position telle à permettre la prise de la pièce (0) qui s'y trouve, et la deuxième machine à souder (28''—31'') et le deuxième moyen de prise font face à la station (D) de laminage, tandis que, quand ledit support mobile (20—23) de la station de soudage (C) est dans sa deuxième position, la première machine a souder et le premier moyen de prise font face à la station (D) de laminage, ledit moyen de prise, dans sa position étendue, est dans une position telle à permettre le transfert d'une pièce (0') aux moyens (50) de support et de guidage de la station (D) de laminage, et la deuxième machine à souder et le deuxième moyen de prise font face à la station (B) d'enroulement; ladite machine à souder étant disposée pour effectuer l'opération de soudage pendant la course desdits moyens de prise (40—46) de la position retirée vers la position étendue, et ledit support mobile (20—23) de la station (C) de soudage étant disposé pour passer de la première à la deuxième position pendant l'exécution du soudage.

2. Appareillage selon la revendication 1, caractérisé en ce que la station (D) de laminage comprend un support mobile (53), déplaçable entre une première et une deuxième position, et une paire de machines à laminer (50—56) supportées par ledit support mobile (53) et disposées d'une façon telle que, dans la première position du support de la station (D), la première machine à laminer fait face à la station (C) de soudage et la deuxième machine à laminer est tournée vers la station (E) d'enlèvement, tandis que, dans la deuxième position du support de la station (D), la première machine à laminer fait face à la station (E) d'enlèvement et la deuxième machine à laminer est tournée vers la station (C) de soudage.

3. Appareillage selon la revendication 1, caractérisé en ce que la station (8) d'enroulement comprend des rouleaux enrouleurs (1, 2), au dessus desdits rouleaux enrouleurs une plaque (8) avec une saillie d'arrêt et une barre (9) avec une saillie d'arrêt faisant face, à une distance prefixée, à la saillie d'arrêt de la plaque (8), deux blocs (5, 6) de guidage du tronçon (0) en cours d'enroulement, déplaçables sur des glissières (7) jusqu'à une position en dehors de l'engagement avec ledit tronçon (0), et un bloc supérieur (12) de retenue activable par des moyens d'actionnement (13) pour immobiliser d'une façon exacte et répétitive un tronçon (0) enroulé dont les extrémités aboutent contre lesdites saillies d'arrêt de la plaque (8) et de la barre (9).

4. Appareillage selon la revendication 1, caractérisé en ce que ladite machine à souder (24—36) comprend des bras inférieurs (27) et supérieurs (28) à culbuteur portant à leurs extrémités externes des rouleaux de soudage (30, 31) et reliés, à leurs extrémités internes, à un cylindre hydraulique (29) de pression, et que ledit moyen de prise (40—46) coordonné à la machine à souder (24—36) est constitué par des éléments mobiles de prise (41—42) déplaçables parallèlement auxdits bras de la machine à souder et disposés à l'extérieur desdits bras supérieurs (28) de la machine à souder.

5. Appareillage selon la revendication 4, caractérisé en ce que lesdits éléments mobiles de prise (41—42) se terminent aux extrémités externes par des étaux (44) conformés d'une manière correspondante à un secteur de la surface externe d'une tronçon enroulé (0), ayant un épaulement interne fixe et des mâchoires externes (46) actionnables pour saisir un tronçon enroulé (0) par ses bords opposés, tout en maintenant inchangée la configuration géométrique des bords à souder, telle au'établie dans l'opération précédente; et que lesdits éléments mobiles de prise (41—42) sont disposés pour repousser lesdits blocs de guidage (5, 6) de la station (B) d'enroulement jusqu'en dehors de l'engagement avec ledit tronçon enroulé (0), pendant l'opération de prise de ce dernier.

6. Appareillage selon la revendication 4, caractérisé en ce que lesdits rouleaux de soudage (30, 31) sont en forme de secteurs, sont disposés pour tourner, pendant l'exécution de soudage, lelong d'un angle limité, présentent des moyens élastiques de rappel à la position initiale, et sont reliés au circuit électrique d'alimentation (34) à travers des conducteurs flexibles (35).

7. Appareillage selon la revendication 6, caractérisé en ce que lesdits rouleaux de soudage (30, 31) en forme de secteurs portent des segments opératifs (32) retenus d'une manière rechangeable par des moyens de fixage.

8. Appareillage selon les revendications 1 et 4 à 7, caractérisé en ce que deux machines à souder (27—31) et deux moyens de prise (40—46) coordonnés a celles-ci sont montés sur une plinthe de support (23), laquelle contient un transformateur d'alimentation (24) et s'appuie à sont tour sur un coussinet tournant (21) porté par un embasement (20) et pivotant en des directions alternativement opposées lelong d'un angle préfixé sous l'action d'un moteur (22), la connexion électrique dudit transformateur (24) au réseau d'alimentation (25) étant effectuée à travers des conducteurs flexibles (26).

9. Appareillage selon la revendication 1, caractérisé en ce que la station (D) de laminage comprend au moins une machine à laminer (50—56) comprenant un rouleau (56) actionné par un moteur (52) et supporté par un bras inférieur (54), et un rouleau fou (57) supporté par un bras supérieur (55), lesdits bras inférieur et supérieur formant un système à compas, et un cylindre hydraulique (51) étant monté entre lesdits bras (54, 55) pour appliquer auxdits rouleaux (56, 57) la pression de laminage.

10. Appareillage selon la revendication 9, caractérisé en ce que lesdits moyens (50) pour supporter et guider les pièces en travail comprennent un organe de guidage parallèle desdits bras et au moins un dispositif électromagnétique de prise supporté par ledit organe de guidage.

11. Appareillage selon les revendications 1, 9 et 10, caractérisé en ce que deux machines à laminer (51—56) et deux moyens de support et de guidage (50) coordonnés à celles-ci sont montés sur une plinthe de support (53), s'appuyant à son tour sur un coussinet tournant porté par un embasement et pivotant en des directions alternativement opposées lelong d'un angle préfixé, sous l'action d'un moteur.

12. Appareillage selon la revendication 1, caractérisé en ce que ladite station (E) d'enlèvement du matériel en excès comprend au moins un outil mécanique (68) à actionnement alternatif, agissant comme une limeuse sur les bords latéraux de chaque virole (0') soudée et laminée.

13. Appareillage selon la revendication 12, caractérisé en ce que ladite station (E) d'enlèvement du matériel en excès comprend une paire de dispositifs (E', E'') à outil mécanique disposés symétriquement pour agir simultanément sur les deux côtés d'une virole (0') soudée et laminée.

14. Appareillage selon la revendication 12, caractérisé en ce que chaque dispositif à outil mécanique comprend un bâti (60) déplaçable sur des glissières (58) pour être approché à la virole à travailer, des moyens (59) pour actionner ledit déplaçement, un outil mécanique (68) et des moyens (61—67) pour conférer audit outil mécanique (68) un mouvement alterantif de travail présentant des périodes de regression destinées à empêcher le talonnement de l'outil.

15. Appareillage selon la revendication 14, caractérisé en ce que lesdits moyens (61—67) pour conférer à l'outil mécanique (68) un mouvement alternatif comprennent un moteur (61) actionnant deux roues (62, 63) qui supportent des pivots excentriques (64, 65) disposés en quadrature entr'eux, un bras (66) portant l'outil (68) et relié à l'un (64) desdits pivots excentriques, et une bielle (67) reliant ledit bras (66) à l'autre pivot excentrique (65).

## Patentansprüche

1. Einrichtung zur Herstellung von aus Blechstreifenabschnitten (A) gefortigten Ringstücken (0'), die zur nachträglichen Bearbeitung zwecks Herstellung von Felgen für Fahrzeugräder bestimmt sind, mit einer aus einem Kalander (1—13) bestehenden Wickelstation (B), mit einer Schweissstation (C), mit einer Fertigungsstation (D) und mit einer Abtragungsstation (E) zum Abtragen des von des Schweissgang erzeugten Ueberschussmaterials, dadurch gekennzeichnet, dass die Schweissstation (C) aus zwei intermittierend arbeitenden Schweissmaschinen (28'—31'; 28''—31'') mit fluchtrechten Rollen und entsprechenden Ergreifungsmittel (40—46) zum Ergreifen des Werkstückes (0'), welche Ergreifungsmittel zwischen einer ausgefahrenen Stellung und einer eingefahrenen Stellung verschiebbar sind, und aus einem beweglichen, zwischen einer ersten und einer zweiten Stellung verschiebbaren Halter (20—23) besteht; dass die Fertigungsstation (D) aus einer warmbearbeitenden Walzstation mit wenigstens einem Paar Rollen (56, 57), mit Mitteln (52) zur Betätigung wenigstens einer dieser Rollen und mit Mitteln (50) zur Halterung und Führung der in Bearbeitung befindlichen Werkstücke (0') besteht; und dass die Abtragungsstation (E) aus mechanischen Abtragungsmitteln (58—68) zur Abtragung des Materials besteht, die zur Wirkung nur auf die Endbereiche der Werkstücke (0') eingerichtet sind, wobei die gegenseitige Anordnung der erwähnten Stationen (B-E) derart getroffen ist, dass wenn der bewegliche Halter (20—23) der Schweissstation (C) in der ersten Stellung liegt, dann befinden sich die erste Schweissmaschine (28'—31') und das erste Ergreifungsmittel (40—46) gegenüber der Wickelstation (B) und erstreckt sich das Ergreifungsmittel (40—46), in seiner ausgefahrenen Stellung, in die Wickelstation (B) in einer Stellung die das Ergreifen des dort befindlichen Werkstükkes (0) ermöglicht, und befinden sich die zweite Schweissmaschine (28''—31'') und das zweite Ergreifungsmittel gegenüber der Walzstation (D), während, wenn der erwähnte bewegliche Halter (20—23) der Schweissstation (C) in der zweiten Stellung liegt, dann stehen die erste Schweissmaschine (28'—31') und das erste Ergreifungsmittel gegenüber der Walzstation (D) und befindet sich das erwähnte Ergreifungsmittel, in seiner ausgefahrenen Stellung, in einer Stellung die die Ueberführung eines Werkstückes (0') auf die Halt- und Führungsmittel (50) der Walzstation (D) ermöglicht, und stehen die zweite Schweissmaschine und das zweite Ergreifungsmittel gegenüber der Wickelstation (B); wobei die Schweissmaschine zur Ausführung der Schweissung während des Uebergangs der Ergreifungsmittel (40—46) von der eingefahrenen zur ausgefahrenen Stellung eingerichtet ist, und wobei der bewegliche Halter (20—23) der Schweissstation (C) zum Uebergang von der ersten zur zweiten Stellung während der Ausführung der Schweissung eingerichtet ist.

2. Einrichtung nach Anspruch 1, dadurch gekennzeichnet, dass die Walzstation (D) einen beweglichen Halter (53) und zwei Walzmaschinen (50—56) umfasst, wobei der Halter zwischen einer ersten und einer zweiten Stellung verschiebbar ist, und die Walzmaschinen auf dem beweglichen Halter (53) gelagert und derart angeordnet sind, dass in der ersten Stellung des Halters der Station (D) die erste Walzmaschine gegenüber der Schweissstation (C) steht und die zweite Walzmaschine gegen die Abtragungsstation (E) gerichtet ist, während in der zweiten Stellung des Halters der Station (D) die erste Walzmaschine gegenüber der Abtragungsstation (E) steht und die zweite Walzmaschine gegen die Schweissstation (C) gerichtet ist.

3. Einrichtung nach Anspruch 1, dadurch gekennzeichnet, dass die Wickelstation (B) umfasst: zwei Wickelrollen (1, 2), auf diesen Wickelrollen eine Platte (8) mit einem Anschlagabsatz und eine Stange (9) mit einem Anschlagabsatz, der gegenüber den Anschlagabsatz der Platte (8) in einem vorbestimmten Abstand davon liegt, zwei Führungsblöcke (5, 6) zur Führung des sich in Wickeln befindlichen Abschnitts (0), die auf Führungen (7) bis zur Freigabe vom Abschnitt (0) verschiebbar sind, und einen oberen Halteblock (12), der durch Betätigungsmittel (13) betätigbar ist, um einen gewickelten Abschnitt (0), mit seiner Ende an die Anschlagabsätze der Platte (8) und der Stange (9) angestossen, in genauer und wiederholbarer Weise festzuhalten.

4. Einrichtung nach Anspruch 1, dadurch gekennzeichnet, dass die Schweissmaschine (24—36) untere (27) und obere (28) Kipphebelarme umfasst, die an den äusseren Enden Schweissrollen (30, 31) tragen und an den inneren Enden mit einem hydraulischen Druckzylinder (29) verbunden sind, und dass das der Schweissmaschine (24—36) zugeordnete Ergreifungsmittel (40—46) aus beweglichen Ergreifungselementen (41—42) besteht, die parallel zu den Armen der Schweissmaschine verschiebbar und ausserhalb der oberen Arme (28) der Schweissmaschine angeordnet sind.

5. Einrichtung nach Anspruch 4, dadurch gekennzeichnet, dass die beweglichen Ergreifungselemente (41—42) an ihren äusseren Enden entsprechend einem Sektor der Aussenfläche eines gewickelten Abschnittes (0) gestaltete Spannbackenpaare (44) bilden, die eine feststehende innere Schulter und betätigbare äussere Backen (46) zur Ergreifung eines gewickelten Abschnittes (0) an seinen entgegengesetzten Rändern unter unveränderten Aufrechterhaltung der im vorhergehenden Arbeitsvorgang bestimmten geometrischen Gestalt der zusammenzuschweissenden Endrandbereiche aufweisen, und dass die beweglichen Ergreifungselemente (41—42) dazu vorgesehen sind, die Führungsblöcke (5, 6) der Wickelstation (B) ausser Eingriff mit dem gewickelten Abschnitt (0) während der Ergreifung der letzteren zurückzustossen.

6. Einrichtung nach Anspruch 4, dadurch gekennzeichnet, dass die Schweissrollen (30, 31) als Sektoren ausgebildet sind, zur Drehung um einen beschränkten Winkel während des Schweissvorganges eingerichtet sind, elastische Rückholmittel zum Rückholen zur Ausgangsstellung aufweisen, und durch biegsame Leitungen (35) mit dem elektrischen Speisestromkreis (34) verbunden sind.

7. Einrichtung nach Anspruch 6, dadurch gekennzeichnet, dass die sektorförmig ausgebildeten Schweissrollen (30, 31) Arbeitssegmente (32) tragen, die durch Befestigungsmittel in ersetzbarer Weise gehalten sind.

8. Einrichtung nach Ansprüche 1 und 4 bis 7, dadurch gekennzeichnet, dass zwei Schweissmaschinen (27—31) und zwei diesen zugeordnete Ergreifungsmittel (40—46) auf einer Halteplinthe (23) gelagert sind, die einen Speisetransformator (24) enthält, und ihrerseits auf einer auf einem Gestell (20) gelagerten und unter Wirkung eines Motors (22) in abwechselnd entgegengesetzten Richtungen um einen vorbestimmten Winkel drehbaren Drehplatte (21) aufliegt, wobei die elektrische Verbindung des Transformators (24) mit der Speiseanlage (25) mittels beigsamen Leitungen (26) erfolgt.

9. Einrichtung nach Anspruch 1, dadurch gekennzeichnet, dass die Walzstation (D) wenigstens eine Walzmaschine (50—56) umfasst, die mit einer durch einen Motor (52) angetriebenen, durch einen unteren Arm (54) abgestützten Rolle (56) und mit einer durch einen oberen Arm (55) abgestützten Leerlaufrolle (57) versehen ist, wobei der untere und der obere Arm ein Zirkelsystem bilden und wobei ein hydraulischer Zylinder (51) zwischen diesen Armen (54, 55) angeordnet ist, um an die Rollen (56, 57) den Walzdruck anzulegen.

10. Einrichtung nach Anspruch 9, dadurch gekennzeichnet, dass die Mittel (50) zur Abstützung und Führung der Werkstücke ein parallel zu den Armen verlaufendes Führungsglied und wenigstens eine durch das Führungsglied abgestützte elektromagnetische Ergreifungsvorrichtung umfassen.

11. Einrichtung nach Ansprüche 1, 9 und 10, dadurch gekennzeichnet, dass zwei Walzmaschinen (51—56) und zwei diesen zugeordnete Abstützungs- und Führungsmittel (50) auf einer Halteplinthe (53) gelagert sind, die ihrerseits auf einer auf einem Gestell gelagerten und unter der Wirkung eines Motors in abwechselnd entgegengesetzte Richtungen um einen vorbestimmten Winkel drehbaren Platte aufliegt.

12. Einrichtung nach Anspruch 1, dadurch gekennzeichnet, dass die Abtragungsstation (E) zur Abtragung des Ueberschussmaterials wenigstens ein abwechselnd betätigbares mechanisches Werkzeug (68) umfasst, das auf Art eines Hobels auf die Seitenränder jedes geschweissten und gewalzten Ringstückes (0') wirkt.

13. Einrichtung nach Anspruch 12, dadurch gekennzeichnet, dass die das Ueberschussmaterial abtragende Abtragungsstation (E) zwei Vorrichtungen (E', E'') mit mechanischem Werkzeug umfasst, die zur gleichzeitigen Berabeitung der beiden Seiten eines geschweissten und gewalzten Ringstückes (0') symmetrisch angeordnet sind.

14. Einrichtung nach Anspruch 12, dadurch gekennzeichnet, dass jede Vorrichtung mit mechanischem Werkzeug umfasst: einen zwecks Annäherung an das zu bearbeitende Ringstück auf Führungen (58) verschiebbaren Rahmen (60), Antriebsmittel (59) für diese Verschiebung, ein mechanisches Werkzeug (68) und Mittel (61—67) um dem mechanischen Werkzeug (68) eine abwechselnde Arbeitsbewegung zu erteilen, die Rückschrittperioden zur Vermeidung des Auffahrens des Werkzeuges aufweist.

15. Einrichtung nach Anspruch 14, dadurch gekennzeichnet, dass die Mittel (61—67) um eine abwechselnde Bewegung dem mechanischen Werkzeug (68) zu erteilen umfassen: einen Motor (61) zum Antreiben zweier Räder (62, 63), die in Quadratur zueinander angeordnete exzentrische Zapfen (64, 65) tragen, einen das Werkzeug (68) tragenden und mit einem (64) der exzentrischen Zapfen verbundenen Arm (66), und eine den Arm (66) mit dem anderen exzentrischen Zapfen (65) verbindende Schubstange (67).

**Claims**

1. An equipment for manufacturing, starting from metal plate strip cut lengths, ring members (0') intended to be successively worked to form rims for vehicle wheels, comprising a bending station (B) formed by a calender (1—13), a welding station (C), a finishing station (D) and a removal station (E) for removing the excess material resulting from the welding, characterized in that the welding station (C) comprises two welding machines (28'—31'; 28''—31'') with flushing rollers of the discontinuous type, with corresponding grasp means (40—46) for grasping the workpiece (0'), movable between an extracted position and a retracted position, and by a movable support (20—23) displaceable between a first and a second position; the finishing station (D) is formed by a hot rolling station comprising at least a pir of rollers (56, 57), means (52) for driving at least one of said rollers and means (50) for supporting and guiding the workpieces (0'); and the removal station (E) is formed by mechanical means (58—68) for material removing, arranged to work only on the end portions of the workpieces (0'); the mutual arrangement of said stations (B-E) being such that when said movable support (20—23) of the welding station (C) is in its first position, the first welding machine (28'—31') and the first grasp means (40—46) face the bending station (B), said grasp means (40—46), in its extracted position, extends into the bending station (B) in such a position as to be able to grasp the workpiece (0) lying therein, and the second welding machine (28''—31'') and the second grasp means face the rolling station (D), whilst, when said movable support (20—23) of the welding station (C) is in its second position, the first welding machine and the first grasp means face the rolling station (D), said grasp means, in its extracted position, is located in such a position as to allow a workpiece (0') to be transferred to the support and guide means (50) of the rolling station (D), and the second welding machine and the second grasp means face the rolling station (B); said welding machine being arranged to carry out the welding operation during the travel of said grasp means (40—46) from the retracted position towards the extracted position, and said movable support (20—23) of the welding station (C) being arranged so as to pass from the first to the second position during the welding step.

2. An equipment according to Claim 1, characterized in that the rolling station (B) comprises a movable support (53), displaceable between a first and a second position, and a pair of rolling machines (50—56) carried by said movable support (53) and arranged in such a manner that, in the first position of the support of station (D), the first rolling machine faces the welding station (C) and the second rolling machine is turned towards the removal station (E), whilst, in the second position of the support of station (D), the first rolling machine faces the removal station (E) and the second rolling machine is turned towards the welding station (C).

3. An equipment according to Claim 1, characterized in that the bending station (B) comprises bending rollers (1, 2), above said bending rollers a plate (8) with an abutment step and a bar (9) with an abutment step facing at a pre-established distance the abutment step of the plate (8), two guide blocks (5, 6) for guiding the cut length (0) in course of bending, movable on guides (7) until they are disengaged from said cut length (0), and an upper retainer block (12) actuated by driving means (13) for locking in an exact and repeatable manner a bent cut length (0) having its ends abutting against said abutment steps of the plate (8) and the bar (9).

4. An equipment according to Claim 1, charac-

terized in that said welding machine (24—36) comprises lower (27) and upper (28) rocker arms supporting welding rollers (30, 31) at their outer ends, and connected at their inner ends to a thrust hydraulic cylinder (29), and that said grasp means (40—46) associated with the welding machine (26—36) is formed by movable grasp elements (41—42) displaceable parallel to said arms of the welding machine and arranged outside said upper arms (28) of the welding machine.

5. An equipment according to Claim 4, characterized in that said movable grasp elements (41—42) terminate at their outer ends with vices (44), which are so shaped as to conform to a sector of the outer surface of a bent cut length (0) and have a fixed inner shoulder and outer jaws (46) operable to grasp a bent cut length (0) on its opposite edges while maintaining unmodified the geometrical configuration of the end edge portions to be welded, as established in the preceding working step; and that said movable grasp elements (41—42) are arranged to bring back said guide blocks (5, 6) of the bending station (B) until out of engagement with said bent cut length (0) during the grasping of this latter.

6. An equipment according to Claim 4, characterized in that said welding rollers (30, 31) are in the form of sectors, they are arranged to rotate, during the welding operation, by a limited angle, are provided with elastic withdrawal means for returning to the starting position, and are connected to the electric feeding circuit (34) through flexible conductors (35).

7. An equipment according to Claim 6, characterized in that said welding rollers (30, 31) in the form of sectors carry operative segments (32) replaceably retained by fastening means.

8. An equipment according to Claims 1, and 4 to 7, characterized in that two welding machines (27—31) and two grasp means (40—46) associated therewith are mounted on a support plinth (23) containing a feeding transformer (24), carried on its turn by a rotatable support plate (21) mounted on a base and rotatable in alternately opposite directions, by a pre-established angle, under the action of a motor (22), the electric connection of said transformer (24) to the feeding system (25) being made through flexible conductors (26).

9. An equipment according to Claim 1, characterized in that the rolling station (D) comprises at least a rolling machine (50—56) including a roller (56) driven by a motor (52), supported by a lower arm (54), and an idle roller (57), supported by an upper arm (55), said lower and upper arms forming a compasses system, and an hydraulic cylinder (51) being mounted between said arms (54, 55) in order to exert onto said rollers (56, 57) the rolling pressure.

10. An equipment according to Claim 9, characterized in that said means (50) for supporting and guiding the workpieces comprise a guiding member parallel to said arms and at least an electromagnetic grasping device supported by said guide member.

11. An equipment according to Claims 1, 9 and 10, characterized in that two rolling machines (51—56) and two support and guide means (50) associated therewith are mounted on a support plinth (53), carried on its turn by a rotatable support plate mounted on a base and rotatable in alternately opposite directions, by a pre-estabished angle, under the action of a motor.

12. An equipment according to Claim 1, characterized in that said removal station (E) for removing the excess material comprises at least one alternately operable mechanical tool (68) working as a shaper on the side edges of each welded and rolled ring member (0').

13. An equipment according to Claim 12, characterized in that said removal station (E) for removing the excess material comprises a pair of mechanical tool devices (E', E''), symmetrically arranged to simultaneously work on both sides of a welded and rolled ring member (0').

14. An equipment according to Claim 12, characterized in that each mechanical tool device comprises a frame (60) movable on guides (58) for approaching to the ring member to be worked, means (59) for actuating said movement, a mechanical tool (69) and means (61—67) for imparting to said mechanical tool (68) a reciprocating work movement having regression periods intended to prevent the tool from tailgating.

15. An equipment according to Claim 14, characterized in that said means (61—67) for imparting a reciprocating movement to the mechanical tool (68) comprise a motor (61) which drives two wheels (62, 63) provided with eccentric pivots (64, 65) arranged in quadrature the one another, an arm (66) supporting the tool (68) and connected to one (64) of said eccentric pivots, and a connecting rod (67) linking said arm (66) to the other eccentric pivot (65).

FIG. 1

FIG. 2

FIG. 3

EP 0 164 802 B1

FIG. 4

FIG. 5

FIG. 7

2

FIG. 6

FIG.17

FIG.16

FIG.8

FIG.9

FIG.10

FIG.11

FIG.14

FIG.15

FIG.12

FIG.13

5